# EUROPÄISCHE PATENTANMELDUNG

(11) **EP 1 029 604 A2**
(43) Veröffentlichungstag der Anmeldung: **23.08.2000**
(21) Anmeldenummer: 00101744.1
(22) Anmeldetag: 28.01.2000
(51) Int. Cl.: B09C 1/02

(54) **Verfahren zur Entfernung von Schwermetallen aus Böden**

(30) Priorität: 11.02.1999 DE 19905699
(71) Anmelder: Forschungszentrum Karlsruhe GmbH, 76133 Karlsruhe (DE)
(72) Erfinder: Kley, Caroline, 75015 Bretten (DE); H-ll, Wolfgang, Dr., 76275 Ettlingen (DE)

(57) **Zusammenfassung**

Der Erfindung liegt die Aufgabe zugrunde, ein Verfahren zur Entfernung von Schwermetallen aus Böden vorzuschlagen, das einerseits zumindest beim in-situ Einsatz keine elektrische Energie benötigt, andererseits geringe Kosten verursacht und den behandelten Boden nicht nachhaltig schädigt.

Die Aufgabe wird erfindungsgemäß durch ein Verfahren mit folgenden Schritten gelöst:
a) Sättigen von Wasser mit Kohlendioxid bei einem Kohlendioxid-Partialdruck von 1 bis 6 bar,
b) Einbringen des mit Kohlendioxid gesättigten Wassers in einen Boden, wobei die Schwermetalle in dem Wasser gelöst werden,
c) Auffangen des Wassers,
d) Entfernen der in dem Wasser gelösten Schwermetalle.

## Beschreibung

Die Erfindung betrifft ein Verfahren zur Entfernung von Schwermetallen aus Böden gemäß dem ersten Patentanspruch.

In Karl J. Thomé-Kozmiensky: 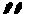 Altlasten 2", EF-Verlag für Energie- und Umwelttechnik GmbH (1988) wird in dem Beitrag von J. J. Gaastra und Manfred Ried: 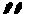 Cacimium-Elimination aus Boden nach einem in-situ - Verfahren", Seiten 749-756 über die Entwicklung eines Sanierungskonzeptes und dessen Betriebsergebnisse berichtet. Das Sanierungskonzept geht davon aus, daß Cd-Verunreinigungen als feste Phase mit dem Boden assoziiert vorliegen. Durch die Versickerung von angesäuertem Wasser soll eine Cd-Remobilisation herbeigeführt werden, wobei das in Lösung gehende Cd mit dem Grundwasser abgepumpt wird. Zur Ansäuerung des Bodens und zum Auswaschen der Schermetalle werden Salpetersäure, Salzsäure und Calciumchlorid eingesetzt, wobei die besten Remobilisierungswerte mit Salzsäure bei einem pH von ca. 3,5 erzielt werden. Die Entfernung des Cd aus dem Grundwasser erfolgt durch Ionenaustauscher oder durch Fällung. Nach der Sanierung des Bodens wird mit Natriumhydroxid bei einem pH von 8,5 neutralisiert, um das noch vorhandene restliche Cd wieder zu immobilisieren.

Ein ähnliches Verfahren ist aus G. Müller und S. Riethmayer: 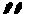 Chemische Entgiftung: das alternative Konzept zur problemlosen und endgültigen Entsorgung Schwermetall-belasteter Baggerschlämme", Chemiker-Zeitung, 106, Jahrgang (1982), Nr. 7/8, 289-292 bekannt.

Diese Verfahren haben den Nachteil, daß die Bodeninhaltsstoffe unspezifisch aufgelöst werden und die Bodenmatrix angegriffen wird, so daß ein denaturierter Boden zurückbleibt, der seine natürliche Funktion als Lebensraum und Schutzfilter nur schwer wieder erlangen kann.

In K. Fischer et al: 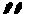 Entwicklung von Methoden zur Dekontamination schwermetallbelasteter Böden und Altlasten mittels natürlicher, organischer Komplexbilder", BayFOREST (Bayrischer Forschungsverbund Abfallforschung und Reststoffverwertung), Berichtsheft 2 zum 2. Statusseminar am 20. April 1994 an der TU München, Seiten 219-224 wird über die Extraktionseigenschaften natürlich vorkommender Komplexbildner wie Aminosäuren, Hydroxyund Polycarbonsäuren, Zuckersäuren, Aminozucker und Ketozuckersäuren in Bezug auf Schwermetalle berichtet. Die Extraktion der Schwermetalle erfolgt in neutralem oder alkalischem Bodenmilieu.

Bei diesem Verfahren ist der hohe Preis der eingesetzten Komplexbildner von Nachteil. Außerdem muß nach der Behandlung mit einer mittelfristigen Mobilisierung der restlichen, im Boden verbliebenen Schwermetalle gerechnet werden, da die Komplexbildner zum Teil nur langsam biologisch abgebaut werden.

Aus der EP 0 484 636 A1 ist ein Verfahren zum in-situ Dekontaminieren von mit Schwermetallionen verseuchtem Grundwasser bekannt, bei dem in einem Brunnenrohr durch Begasung ein Grundwasserberg aufgebaut und damit eine Grundwasserströmung erzwungen wird. Diese wird durch einen Siphon mit Ionenaustauscher geführt, dem die Schwermetallionen durch Anlegen einer Spannung aus der Wasserströmung zugeführt werden.

Zur Durchführung dieses Verfahrens ist elektrische Energie erforderlich. Zudem wird die Mobilität der Schwermetalle nicht erhöht, so daß keine verstärkte Auswaschung und signifikante Reinigung des Bodens erfolgt.

Der Erfindung liegt die Aufgabe zugrunde, ein Verfahren zur Entfernung von Schwermetallen aus Böden vorzuschlagen, das einerseits zumindest beim in-situ Einsatz keine elektrische Energie benötigt, andererseits geringe Kosten verursacht und den behandelten Boden nicht nachhaltig schädigt.

Die Aufgabe wird durch das im ersten Patentanspruch beschriebene Verfahren gelöst. Die weiteren Ansprüche geben bevorzugte Ausführungsformen des Verfahrens an.

Erfindungsgemäß wird der Boden mit Wasser behandelt, das zuvor mit Kohlendioxid gesättigt wurde. Die Sättigung erfolgt mit einem Kohlendioxid-Partialdruck von 1 bis 6 bar, wobei vorzugsweise der Kohlendioxid-Partialdruck dem Gesamtdruck entspricht. Für den in-situ - Einsatz des Verfahrens wird ein niedrigerer Partialdruck, etwa im Bereich von 1 bis 2 bar bevorzugt. Wird das Verfahren an ausgekoffertem Boden vorgenommen, werden vorzugsweise Partialdrücke im Bereich von 2 bis 6 bar eingesetzt. Das Sättigen mit Kohlendioxid kann mittels Druckgasflaschen erfolgen, so daß in-situ keine elektrische Energie benötigt wird.

Anschließend wird das mit Kohlendioxid gesättigte Wasser unter Druck in den von Schwermetall zu befreienden Boden eingebracht. In-situ können hierfür Schluckbrunnen oder Lanzen verwendet werden. Mit ausgekoffertem Boden lassen sich Sprühsysteme, Drehrohrreaktoren oder eine durchströmte Säule einsetzen. Diese Komponenten werden bevorzugt druckfest ausgelegt, so daß der Kohlendioxid-Partialdruck aufrechterhalten wird.

In allen Fällen bewirkt die Einleitung von mit Kohlendioxid gesättigtem Wasser eine pH-Reduzierung im behandelten Boden, die um so größer ist, je höher der Kohlendioxid-Partialdruck ist. Beispielsweise führt eine Einleitung von Kohlendioxid mit einem Partialdruck von 1,5 bar zu einer pH-Reduzierung auf etwa 5,2 im behandelten Wasser. Dadurch werden die im Boden enthaltenen Schwermetalle, insbesondere die Schwermetalle Kupfer, Nickel, Zink und Cadmium, in eine lösliche, zweiwertige Form überführt. Zusätzlich wird die Löslichkeit durch die Bildung von Hydrogencarbonatokomplexen erhöht. Auf diese Weise können 10 bis 50 % der vorliegenden Schwermetalle mobilisiert werden.

Das Wasser mit den nunmehr gelösten Schwermetallen wird nun aufgefangen. In-situ erfolgt dies mit Hilfe von Abwehrbrunnen, die im Abstrom der Schadstoffahne eingerichtet werden. In einer technischen Anlage mit ausgekoffertem Boden wird das Wasser in einer geeigneten Sammeleinrichtung aufgefangen.

Das Wasser wird nunmehr von den Schwermetallen befreit. Dies kann durch geeignete Ionenaustauscher, etwa Schwermetall-selektive, chelatbildende Kationenaustauscher, oder aber durch Aktivtonerde erfolgen. Vorzugsweise wird das von den Schwermetallen befreite Wasser rezykliert.

Die Erfindung bietet einige wesentliche Vorteile. Das Verfahren ermöglicht eine schonende Sanierung ohne starken Angriff auf die Bodenmatrix. Es werden nur Teile des Carbonatpuffersystems zerstört, die gegebenenfalls leicht wieder zu ersetzen sind. Weitere Puffersysteme des Bodens werden nicht angegriffen. Außerdem werden im wesentlichen nur die leicht bis mäßig mobilisierbaren Schwermetallanteile ausgewaschen, die jedoch hauptsächlich für die Grundwasserverunreinigung verantwortlich sind. Eine Nachbehandlung zur Immobilisierung der nicht ausgewaschenen Schwermetallanteile ist nicht erforderlich, da die Kohlensäure aus dem Boden ausgast und daher nicht langfristig beständig ist. Aus dem selben Grund ist mit einer mittelfristigen Remobilisierung der restlichen Schwermetalle nicht zu rechnen.

Die Erfindung wird im folgenden anhand einer Figur und von Ausführungsbeispielen näher erläutert.

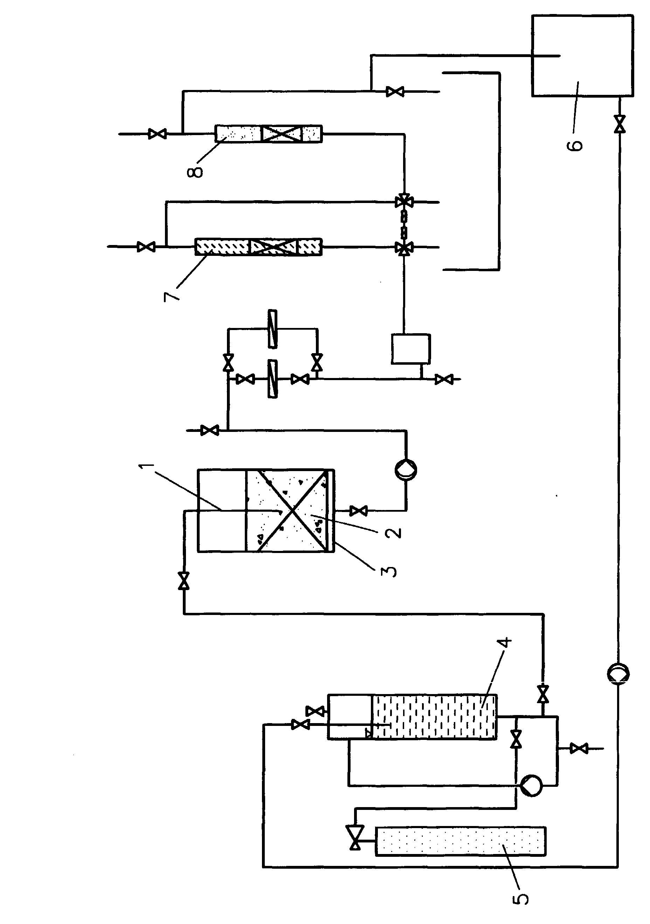

Die Figur zeigt eine Technikumsanlage zur Durchfuhrung des Verfahrens.

In der in der Figur dargestellten Technikumsanlage wurde das Elutionsverhalten in einem Bodenkompartiment um eine einzige Lanze 1 untersucht. Eine Bodenschüttung 2 von 120 kg befand sich in einer Plexiglassäule 3 (Durchmesser 44 cm, Höhe 100 cm, Schüttdichte 1,4 g/cm³, Porosität 0,47) . Als Stützschicht dienten Kies und Sand. Die Lanze 1 war mit seitlichen Austrittsöffnungen versehen, die sich 6 bis 9 cm unter der Bodenoberkante befanden. Zur Verminderung der Randgängigkeit des mit Kohlendioxid gesättigten Wassers entlang der Lanze erfolgte eine Abdichtung nach oben mit einer paßgenauen Mipolam-Matte und einer Tonabdichtung durch Einschlämmung von Bodenmaterial.

Die Sättigung des verwendeten Leitungswassers erfolgte in einem Vorlagedruckbehälter 4 unter 2,6 bar Kohlendioxid-Partialdruck (theoretischer pH = 5,0). Das Kohlendioxid wurde einer Gasflasche 5 entnommen. Das mit Kohlendioxid gesättigte Wasser wurde durch die Lanze 1 in den Boden 2 eingebracht. Nach vertikaler Passage der Bodensäule wurde das schwermetallkontaminierte Wasser am Grund der Bodensäule abgezogen. Nach Filtration des Wassers erfolgte eine Entfernung der Schwermetalle aus der wäßrigen Lösung mit Hilfe eines schwermetallselektiven Ionenaustauschers 7 und im Falle von Arsen-Kontaminationen mit Hilfe von Aktivtonerde (Al₂O₃) 8. Zur Kreislaufführung des Elutionsmittels bei Durchsätzen von 2 bis 3 l/h wurde das im Sammelbehälter 6 anfallende Eluat über eine füllstandsgesteuerte Membranpumpe in den Vorlagedruckbehälter 4 gefördert und erneut mit Kohlendioxid gesättigt.

Mit dieser Anlage wurden Langzeitversuche durchgeführt. Ein Langzeitversuch wurde mit einem schluffigen Lehmboden mit relativ geringem Durchlässigkeitsbeiwert (k_{f} = 10⁻⁸ bis 10⁻⁹ m/s) durchgeführt. Der Boden war mit den folgenden Schwermetallen kontaminiert:

| | |
|---|---|
| Zink: | 6388 µg/l |
| Blei: | 1130 µg/l |
| Cadmium: | 13,4 µg/l |
| Arsen: | 637 µg/l |
| Tallium: | 8,3 µg/l. |

Der pH-Wert im Eluat lag zwischen 5,9 und 6,4. Nach einer Versuchsdauer von 161 Tagen und einem Durchsatz von ca. 9000 1 gesättigtem Wasser, was ca. 100 Bettvolumina entsprach, wurde aus dem Boden ca. 10 % des gesamten Zink-Inventars und 23 % des Cadmium-Inventars eluiert. Dies entsprach ca. 30 % der im Boden leicht und mäßig mobilisierbaren Schwermetallanteile.

Weitere Versuche wurden in einer entsprechend aufgebauten, kleineren Laboranlage mit bei einem Partialdruck von 6 bar Kohlendioxid gesättigtem Wasser durchgeführt. Hier wurden in den verschiedenen Eluaten pH-Werte zwischen 4,9 und 6,3 erzielt. Nach Durchsatz von ca. 80 bis 300 Bettvolumina konnten aus drei verschiedenen real kontaminierten Böden das Gesamtinventar an Zn, Cu, Ni, Cd und Tl um 10 bis 50 % reduziert werden. Diese Mengen entsprachen einer Auswaschung von 60 bis 100 % der mobilisierbaren Schwermetallanteile.

## Patentansprüche

1. Verfahren zur Entfernung von Schwermetallen aus Böden mit den Schritten:
a) Sättigen von Wasser mit Kohlendioxid bei einem Kohlendioxid-Partialdruck von 1 bis 6 bar,
b) Einbringen des mit Kohlendioxid gesättigten Wassers in einen Boden, wobei die Schwermetalle in dem Wasser gelöst werden,
c) Auffangen des Wassers,
d) Entfernen der in dem Wasser gelösten Schwermetalle.

2. Verfahren nach Anspruch 1, bei dem die Schritte a) bis d) an einem ausgekofferten und in ein Behältnis überführten Boden vorgenommen werden.

3. Verfahren nach Anspruch 2, bei dem in dem Behältnis der Kohlendioxid-Partialdruck aufrechterhalten wird.

4. Verfahren nach Anspruch 2 oder 3, bei dem das gemäß Schritt d) von den Schwermetallen befreite Wasser rezykliert und erneut mit Kohlendioxid gesättigt wird.

5. Verfahren nach Anspruch 1, bei dem die Schritte a) bis d) insitu vorgenommen werden.

6. Verfahren nach Anspruch 5, bei dem das Auffangen des Wassers gemäß Schritt c) durch Abwehrbrunnen erfolgt.

7. Verfahren nach Anspruch 6, bei dem das gemäß Schritt d) von den Schwermetallen befreite Wasser rezykliert und erneut mit Kohlendioxid gesättigt wird.
